# EUROPEAN PATENT SPECIFICATION

(11) **EP 1 541 324 B1**
(45) Date of publication and mention of the grant of the patent: **11.02.2009**
(21) Application number: 04106271.2
(22) Date of filing: 03.12.2004
(51) Int. Cl.: B29D 30/06, B29C 35/08

(54) **A single station tire curing method and apparatus**
Verfahren und Vorrichtung zur Reifenvulkanisierung bei Verwendung einer einzigen Vulkanisiereinheit.
Procédé et dispositif pour la vulcanisation de pneumatiques utilisant un seul poste de vulcanisation.

(30) Priority: 11.12.2003 US 733778; 19.12.2003 US 741752
(43) Date of publication of application: 15.06.2005
(73) Proprietor: The Goodyear Tire & Rubber Company, Akron, OH 44316-0001 (US)
(72) Inventor: Sieverding, Mark Anthony, Uniontown, OH Ohio 44685 (US); Satrape, James Vincent, North Canton, OH Ohio 44720 (US); Girard, Jean-Claude, Copley, OH Ohio 44321 (US)
(74) Representative: Kutsch, Bernd

(56) References cited:
- EP-A- 0 468 342
- EP-A- 0 928 679
- WO-A-02/45942
- US-A- 4 877 468
- PATENT ABSTRACTS OF JAPAN vol. 2002, no. 08, 5 August 2002 (2002-08-05) & JP 2002 096403 A (YOKOHAMA RUBBER CO LTD:THE), 2 April 2002 (2002-04-02)
- PATENT ABSTRACTS OF JAPAN vol. 2000, no. 01, 31 January 2000 (2000-01-31) & JP 11 291363 A (BRIDGESTONE CORP), 26 October 1999 (1999-10-26)

## Description

### Field of the Invention

This invention relates to tire manufacturing generally and most specifically to a method and apparatus for curing a tire.

### Background of the Invention

The curing or vulcanization of an uncured tire requires that the tire be maintained in a closed mold under hot temperatures and high pressures for a period of time which varies between a few minutes and several hours depending on the size of the tire. The equipment used to vulcanize a tire usually includes a press and a mold. The press may have steam or other heating elements brought into contact with the mold to impart heat into the mold to assist in the curing process.

In large volume tire manufacturing it is possible to manufacture tires very rapidly. In a matter of a minute or two an entire tire can be assembled in an automated fashion. The tire curing process, however, may take upwards of four to twenty minutes for a passenger or light truck tire, depending on the tire size, more time, of course, for the larger tires such as earthmover, farm, truck and aviation tires. Accordingly, a large number of molds or presses must be used to maintain an efficient balance between the manufacturing of the tire and the curing of the tire.

In US-A- 4,728,274, a tire curing system was proposed wherein tire curing could be provided by using mobile mold curing units, each designed to house a respective uncured tire. The primary benefit of this system was that the number of curing presses could be minimized and that the molds themselves would be utilized in providing the heat input to cure the tire as the mobile units were being conveyed.

US-A- 5,622,669 provided an induction curing apparatus that would impart heat to a mold and then the mold would be fed into a carousel device which would rotate around a cycle for a predetermined amount of time until the tire was cured. This device required multiple molds to be supplied in order to cure the tires and to match the tire curing sequence which is typically done in tire manufacturing.

All of the prior art requires multiple molds to be used in order to maximize the efficiency. These molds, whether requiring independent presses for each mold or utilizing a carousel or trolley devices for the molds require more equipment than is necessary for the production of a tire.

The present invention provides a more efficient way of manufacturing and curing a tire. In the present invention, a single tire curing station can be used whereby one mold is employed in combination preferably with a heat input source such that the tire can be cured in a very rapid fashion, off-loaded while the next tire being assembled simultaneously in such a fashion that as one tire is built another tire is being cured and that the process can be conducted in as rapid a time as possible in order to ensure that preferably only one mold is needed and only one curing station. The benefits of the present invention are that the manufacturing process can be accomplished in a timeframe of approximately four to twenty minutes and the cure station is capable of providing a fully cured passenger or light truck tire within that same timeframe. More cure time is naturally required for the larger tires. Accordingly, only one mold is needed for each tire building system.

As can be readily appreciated, the present invention provides a slower small unit production capability that is ideal for prototyping and small volume production runs of small and light tires. An objective of the present invention is to match the assembly process with the cure cycle time such that the equipment required is sufficient to produce cured tires at about the same rate the tires are being manufactured.

Historically, such manufacturing systems were avoided because the need for high speed, high volume production has always dictated that such a system be employed. It has come to the inventors' attention that such systems require large volumes of production runs, massive amounts of inventory of finished product and the associated cost of shipping and handling. It is an objective of the present invention to provide a very small yet efficient automated manufacturing and curing system such that small modular units can produce small volume runs in an efficient low-energy consuming fashion. In order to increase volumes, additional modules can be added. A primary advantage of the present system is that the entire tire manufacturing process, start to finish, from components to cured tires, is accomplished at a singular modular workstation.

JP-A 2002-096403 describes a method of assembling and curing a tire according to the preamble of claim 1. The apparatus comprises a tire vulcanization device and, in its neighbor, a tire forming machine and a tread extruder. After a green tire is heated to a given temperature, the green tire is demounted from the tire making machine and conveyed to the tire curing device.

US-A- 4,877,468 describes an other method and apparatus for hot tire forming and subsequent curing of the tire. Further methods and apparatus for manufacturing and curing tires are described in EP-A- 0 928 679, JP-A-11291363, WO-A- 02/45942 and EP-A- 0 468 342.

### Summary of the Invention

A method of assembling and curing a tire according to claim 1 is disclosed

Further, an apparatus for curing a hot uncured tire according to claim 6 is disclosed. Particular embodiment of the invention are the subject of the respective dependent claims.

The additional heat energy may be input by activating one or more induction heating coils. The predetermined optimal cure temperature Tₚ, which approximates the peak cure temperature, is preferably greater than the elevated temperature of the building core and, preferably, also greater than the temperature of the hot tire components when inserted into the mold.

In one aspect, the method may further have the steps of assembling a second tire according to claim 4. This preferred method has the additional heat energy input preferably by activating two or more induction coils timed to a load sequence in an alternating on-off pattern.

The above method of curing a tire is best performed by utilizing an apparatus for curing a tire according to claim 6.

The frame may have a mold support and one or more heating coils attached to the upper surface of the frame which can be brought into heating alignment with the lower surface of the mold.

The apparatus further may have a mold locking means for opening and closing the mold. This mold locking means is preferably attached to the means for moving the induction curing dome and this means for moving is pivotally movable to bring the induction curing dome or the mold locking means into coaxial alignment with the mold prior to encircling the mold.

The induction curing dome may have two or more coils. When using multiple coils, it is preferable that the apparatus include a power modulator for controlling the power input to each coil in an alternating pattern sequence. This ensures that the energy required to activate the coils is reduced over a broader area of power input.

### Definitions

"Axial" or "axially" refers to directions that are on or are parallel to the tire's axis of rotation.
"Circumferential" refers to circular lines or directions extending along the perimeter of the surface of the annular tread perpendicular to the axial direction, and can also refer to the direction of sets of adjacent circular curves whose radii define the axial curvature of the tread, as viewed in cross section.
"Crown" or "tire crown" refers to the tread, tread shoulders and the immediately adjacent portions of the sidewalls.
"EMT" refers to Extended Mobility Technology and EMT tire refers to a tire which is a "runflat", which refers to a tire that is designed to provide at least limited operational service under conditions when the tire has little to no inflation pressure.
"Equatorial plane" refers to the plane perpendicular to the tire's axis of rotation and passing through the center of its tread, or midway between the tire's beads.
"Gauge" refers generally to a measurement, and often to a thickness dimension.
"Lateral" refers to a direction parallel to the axial direction.
"Meridional profile" refers to a tire profile cut along a plane that includes the tire axis.

### Brief Description of the Drawings

The structure, operation, and advantages of the present preferred embodiment of the invention will become further apparent upon consideration of the following description taken in conjunction with the accompanying drawings, wherein:
Figure 1 is a perspective view of an automated tire manufacturing module according to a second embodiment of the present invention;
Figure 2 is a cross sectional plan view of an automated tire manufacturing module according to the invention;
Figure 3 is an exemplary schematic view of the power input pattem for a two coil system;
Figure 4 is a second exemplary schematic view of a power input pattern for a three coil system;
Figures 4A-4E are views of the detachable tire building drum according to the present invention;
Figures 5 and 6 are a perspective view and an exploded view of the self-locking tire mold;
Figure 7 is a cross-sectional view of the carcass drum assembly and carcass shown installed into the mold and ready to be cured.

Certain elements in selected ones of the drawings may be illustrated not-to-scale, for illustrative clarity. The cross-sectional views may be in the form of "slices", or "near-sighted" cross-sectional views, omitting certain background lines which would otherwise be visible in a true cross-sectional view, for illustrative clarity.

### Detailed Description of the Invention

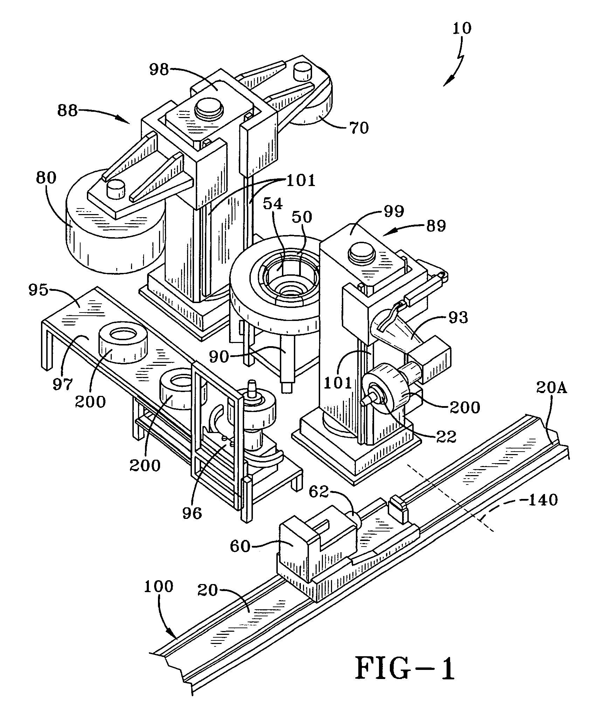

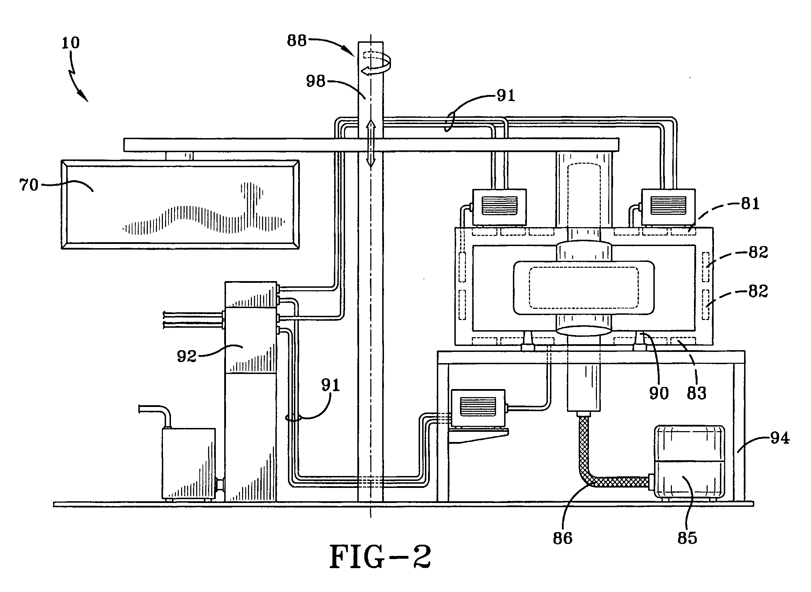

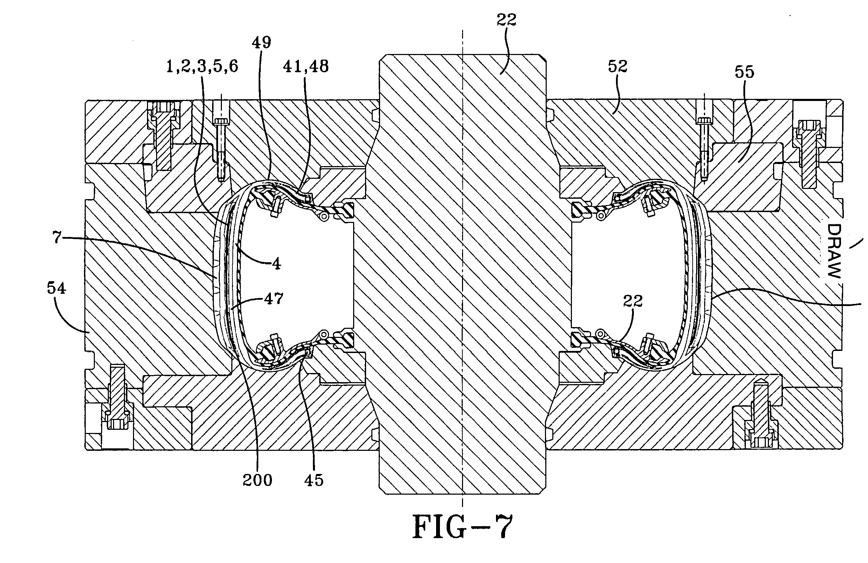

With reference to Figures 1 and 2, views of an automated tire manufacturing curing module 10 according to the present invention are illustrated. This system or module 10 provides for the complete vulcanization of pneumatic tires at one tire curing station using only one mold 50 for a particular tire size or style. This curing module 10 is preferably an integral part of a tire building module 100 which forms the tire carcass subassembly 4 and the tire belt tread subassembly 3. As shown in Figure 7, these two subassemblies 3, 4 after being formed hot and assembled on a detachable elevated temperature building drum core 22 are shown inserted while on the building drum into a tire curing mold 50 immediately after their assembly is completed. When at the tire curing station, the mold 50 will then be closed and heated at a mold curing module 10 which permits the tires 200 to be cured or otherwise vulcanized and removed from the mold 50 and the building drum core 22.

The initial building of a tire 200 is on a mobile tire building trolley 60 with a specific detachable tire building drum core 22 designed to permit the fabrication of the tire carcass 4 and tread belt structure 3 onto the toroidally expanded warmed or elevated temperature building drum core 22 so when the tire carcass 4 and tread belt structure 3 are formed it is in the toroidal shape very close to the finished tire dimensions as it is assembled. The detachable building drum cores 22 are mounted on transporter devices called mobile tire building trolleys 60. This trolley 60 accepts the building drum core 22 and will traverse along a predetermined path or line 20. The trolley 60 provides a means 62 for rotating the tire building drum core 22 at each workstation as the specific tire component is being applied. The workstations and the tire trolley 60 have the software programmed into each of the workstations and trolleys and are coordinated by supervisory software such that the proper component is provided to the tire building drum core 22 at the precise time and location desired. For purposes of this invention, the detailed views of the workstations of the building module 100 are not illustrated.

While this entire process of building the carcass 4 and tread belt structure 3 is being accomplished a simultaneous curing of the uncured tire 200 is occurring.

With particular reference to Figure 1, the trolley 60 is shown adjacent to the tire building drum pickup and transfer mechanism 93 which is attached to a rotating support 99. The tire building drum core 22 has been elevated to a temperature well above ambient, preferably about 60°C or greater as a result of being processed earlier through the mold 50 and having an induction heater transfer energy to the building drum core 22. This building drum core 22 has a significant amount of mass and therefore the heat is retained at a temperature level slightly below the curing temperature level. An empty building drum core 22 is then transferred back to the trolley 60 wherein a tire 200 can be assembled at the various workstations. While the tire 200 is being assembled the building drum's temperature cools slightly. However, the elastomeric components 1, 2, 5, 6, 7, 41, 48 are being formed hot and therefore temperature is being added as these components are being applied to the building drum core 22. The building drum core 22 with the tire assembly 200 on it once picked up by a means 89 for picking up and moving from the trolley is transferred to the mold 50 as illustrated in Figure 1. The means 89 includes a pickup device 93 and a pivoting support 99 which in combination rotates horizontally 180° and then pivot vertically downwardly 90° about the pivoting support 99 such that the axis of the building drum core 22 is facing in a vertical direction and can be lowered and inserted into the open segmented mold 50. Once rotated into coaxial alignment, the pickup device 93 is lowered on the slides 101 of the pivoting support 99.

Once the assembly is inserted into the mold 50, the mold locking means 70 is rotated 90° about a pivoting support 98 and lowered into position to engage the open segmented mold 50 and to close those segments 54 into a closed position and upon closure a top mold plate 52 is then secured onto the mold creating the self-locking mold 50 in a completely closed and contained condition. After the mold 50 is closed the mold locking means 70 is elevated and rotated back 90° and the induction curing dome system 80 mounted approximately 180° from the mold locking means 70 is then pivoted 90° into position aligned with and above the mold 50. The induction dome 80 as illustrated in Figure 2 is then lowered and surrounds the closed segmented mold 50. The induction curing dome 80 and the mold locking means 70 are attached to a means 88 for moving the induction curing dome 80 and the lock means 70 having pivoting support 98 which can rotate the dome 80 and locking means 70 into coaxial alignment with the mold 50. Each device 70, 80 is slidably attached to the pivoting support 98 along slides 101 for raising and lowering into encircling alignment or contact with the mold 50. As illustrated, pressure is induced through the tire building drum core 22 into the elastomeric bladder 23 of the building drum core 22 increasing the pressure of the bladder 23 pressing the uncured tire into the segmented mold to push the elastomeric components by means of a heated gas or fluid, such as nitrogen. The gas or fluid heating system 85 provides the internal heat and pressure to the bladder through hose 86.

Once pressurized, the curing cycle can be initiated by activating the induction coils 81, 82, 83 around the segmented mold 50. As illustrated an induction coil 83 is adjacent the frame 94 as the mold sets upon the mold supports 90 as illustrated in Figure 2. The induction coils 82 around the outer periphery surface of the tread segments 4 can be activated and the upper coils 81 around the top plate 52 also can be activated generating additional heat energy to help cure the tire components. The power supply 92 connected to the induction coils 81 is illustrated and, as shown, several cables 91 are directed to the frame 94 and the curing dome 80 and transmit power to the induction coils 81, 82, 83 as illustrated in Figure 2.

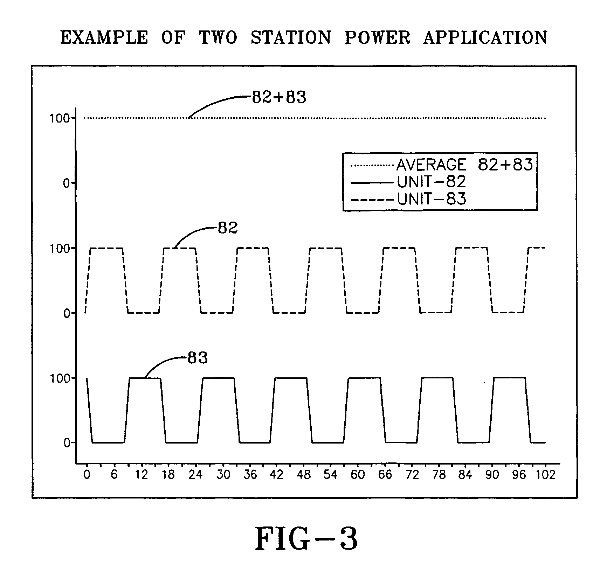

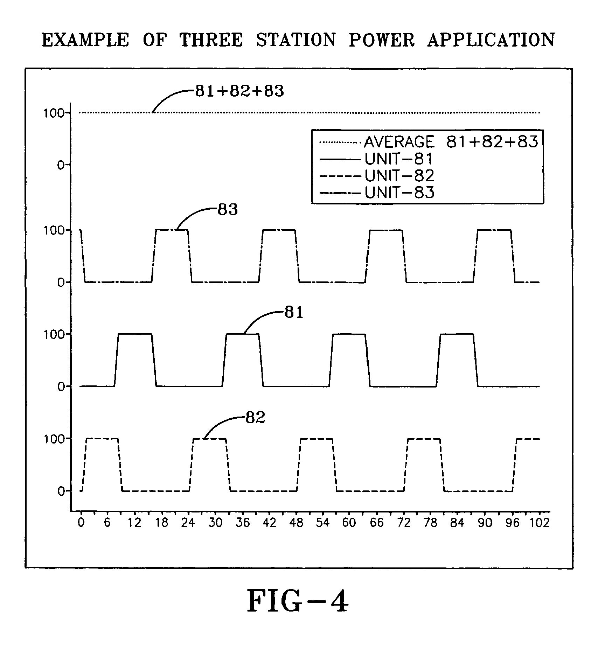

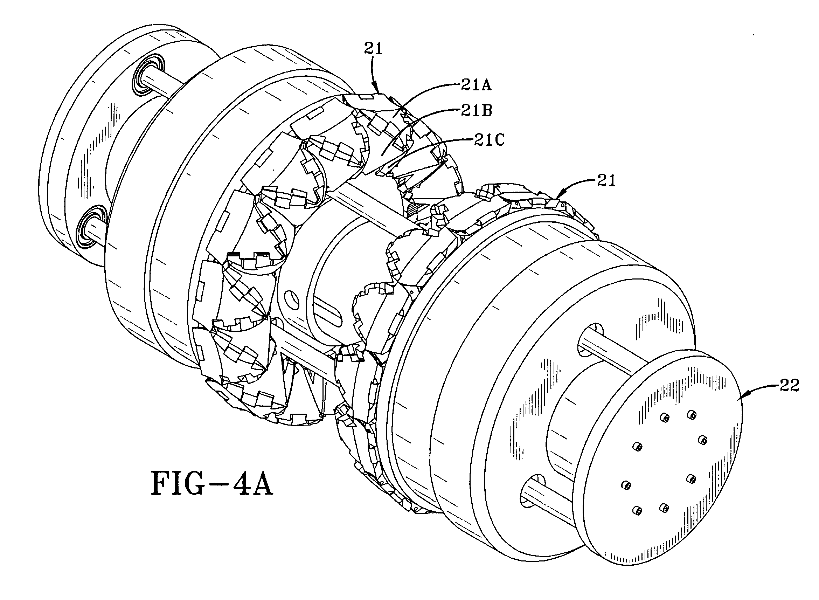

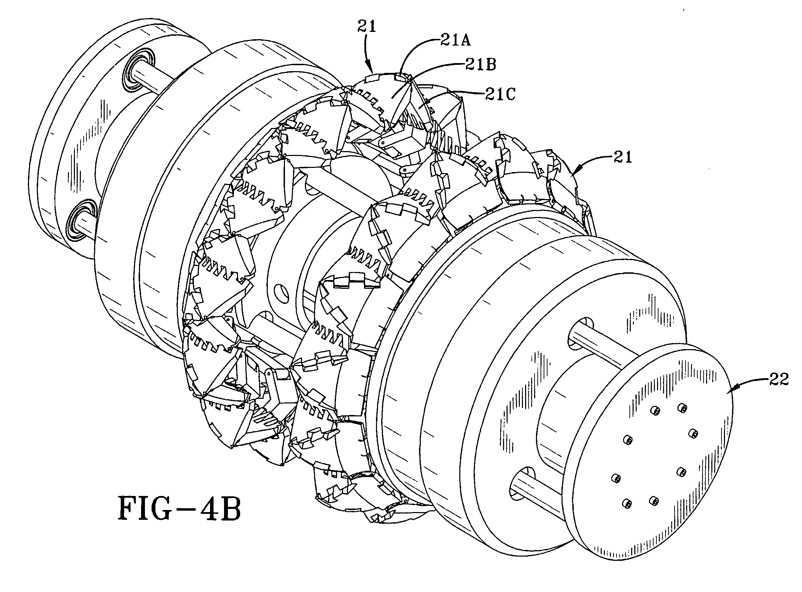

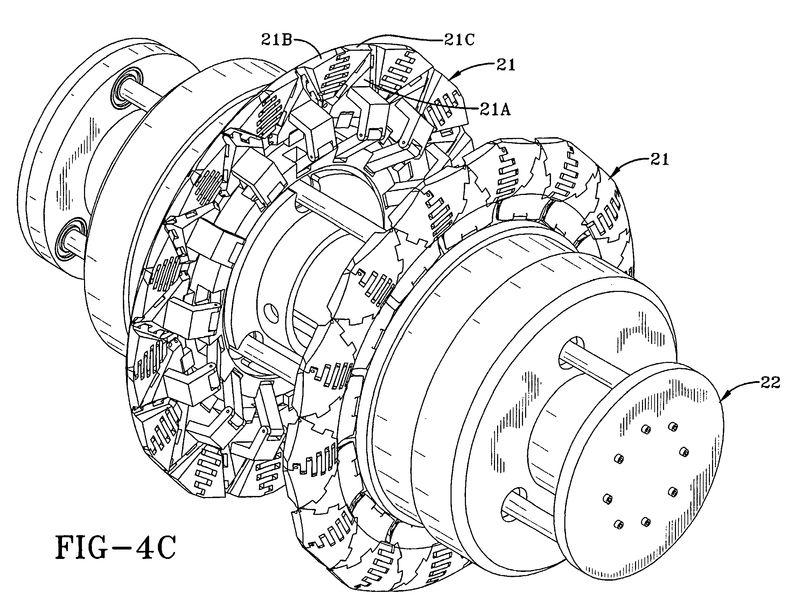

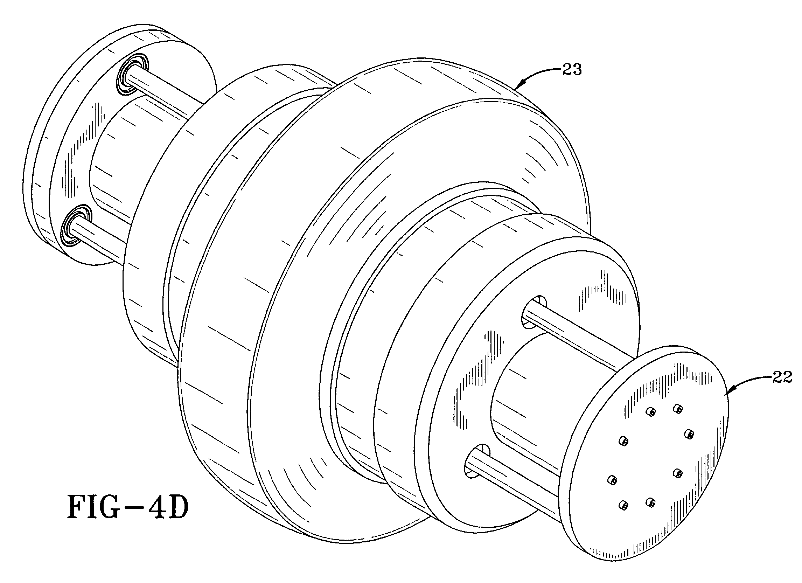

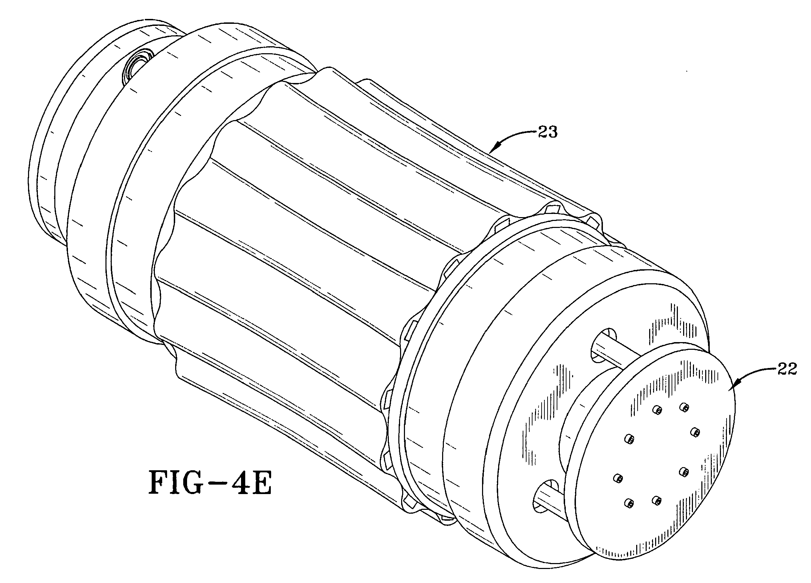

A primary feature of the coils 82, 83 of the induction heating core dome 80 and of the induction coil 81 on the outer surface of the frame 84 is that the power input to each coil 81, 82, 83 can be sequenced in an alternating fashion. This is as illustrated in Figure 3 and Figure 4. In Figure 3 a two coil system 82, 83 is illustrated whereby the sequencing of power to the induction coils 82, 83 is done in an alternating fashion. The combination creates an average peak power input as illustrated at 100. With reference to Figure 4 the input to each heating coil of a three coil system 81, 82, 83 is staggered in such a fashion that the off cycle for each coil represents approximately three on cycles. One on cycle represents approximately one-third of the overall average power being pulled over the entire heating dome. Accordingly, as shown, the average percentage power of 100 is maintained while each coil 81, 82, 83 is on only one-third of the time. The reason for the alternating pattern sequencing of the current to the induction heating coils 81, 82, 83 is to reduce the peak power and current requirement to heat the mold 50. This sequencing of the coils 81, 82, 83 in a controlled fashion rapidly inputs heat to the segmented mold 50 in a pattem similar to that used in microwave ovens wherein power cycles are adjusted accordingly so that the on-off of the power energy input is staggered such that the peak energy consumed to heat the segmented mold 50 is dramatically reduced. The resultant fact is that the entire cure cycle can have the additional heat input energy applied in a very short period of time using a staggered sequence of the various coils around the peripheral surface of the mold 50.

The combination of forming elastomeric components 1, 2, 5, 6, 7, 41, 48 while hot at various workstations and applying to those hot components onto the elevated temperature building drum core 22 ensures that the additional heat input is minimized. In other words, assuming that the building drum core 22 is maintained at a temperature of at least approximately 50°C, preferably 60°C or more, throughout the building cycle and that the components are formed at approximately 60°C at each of the workstations, the additional heat input required to bring the uncured tire, when assembled, to cure is dramatically reduced. In other words, the initial temperature of the uncured tire 200 may be between 50°C and 70°C and the predetermined optimal cure temperature Tₚ may be at approximately 160°C. Accordingly, the incremental difference between the uncured tire and the optimal cure temperature Tₚ is the difference. Therefore, the additional input required to bring the uncured tire to cure temperature requires only an additional amount of energy to bring the components up possibly 90 to 110°C. This can be accomplished in a rather short period of time. Once the optimal cure temperature Tₚ is achieved, it is common to hold the tire assembly for a predetermined period of time (t) to achieve a proper cure cycle. Once this time (t) is achieved the tire 200 will be completely vulcanized or sufficiently vulcanized such that it can be removed from the mold 50.

Once the tire 200 is cured the mold locking means 70 will be swung back into position and lowered over the mold 50 engaging the segments 54 and unlocking the upper mold plates 52 such that the segments 54 can move radially outwardly. Once this is accomplished, the locking means 70 releases from the mold 50, is elevated and pivots away from the open mold 50 with the top sidewall plate 52. After that, the tire pickup and transfer device 99 engages the cured tire 200 on the building drum core 22, picks the entire assembly up and extracts it from the open mold 50 and rotates to the tire building drum removal station 97 as illustrated in Figure 1. Once there, the building drum core 22 is grabbed by a stripper device 96 that extracts the tire from the building drum core 22. The building drum core 22 is extended in an axial direction such that the building drum core 22 collapses so that the tire 200 may be easily removed from the building drum core 22. Once the tire 200 is removed from the building drum core 22 it is positioned onto a conveyor 95 or other stationary table to be removed and put into storage or shipped directly to the customer. In the meantime the building drum core 22 which has recently been extracted from the tire mold 50 will be placed back onto the trolley 60 so that another tire 200 can be assembled. It will be appreciated that the building drum core 22, because of its large mass and size, will maintain a sufficient amount of the temperature that during the building cycle the building drum core 22 maintains an elevated temperature as the hot formed tire components 1, 2, 5, 6, 7, 41, 48 are applied. This entire sequence is then repeated and a second tire 200 is built using the same methodology as described above.

While this entire process of building the carcass 4 and tread belt structure 3 is being accomplished a simultaneous curing of the uncured tire 200 is occurring.

The tire building module 100, in conjunction with the trolley 60 mechanism, is programmed to build not only the carcass 4 but also a particular tread belt structure 3. The belt layers 1 and 2 are applied to the outer peripheral surface of the carcass assembly 4 on the detachable elevated temperature building drum core 22. After the first wide belt 1 is applied and the second narrow belt 2 is applied, a gum strip 5 is applied to each edge of the first belt layer 1 at the belt workstation. If required, an optional overlay workstation 15 can be provided wherein overlays 6 having substantially 0° or very low angles in the circumferential direction are wound onto and overlaying the underlying belt structure 1, 2. Once these components 1, 2, 5 and 6 are laid onto the outer peripheral surface of the carcass 4, the tread 7 is applied over the underlying components as illustrated in Figure 7. Once the tread 7 is freshly extruded it is applied while still hot as either an annular strip or as a spirally wound plurality of strips to form an unvulcanized tread component 7, this completes the tread belt reinforcing structure assembly 3. After the final workstation the building drum core 22 is removed from the trolley 60 and the trolley 60 preferably receives a new empty detachable building drum core 22 and is moved laterally back along the predetermined path 20 on the rails 20A to repeat the process for the next tire building assembly, assuming that the same tire size or style is required. If a different size assembly is required, the building drum staging area 30 will be accessed and a specific building drum core 22 will be provided by removing the initial building drum core 22 and replacing it with a second building drum core 22 of a different size as required. A preheating of the building drum core 22 can be accomplished if so desired to ensure a steady state temperature.

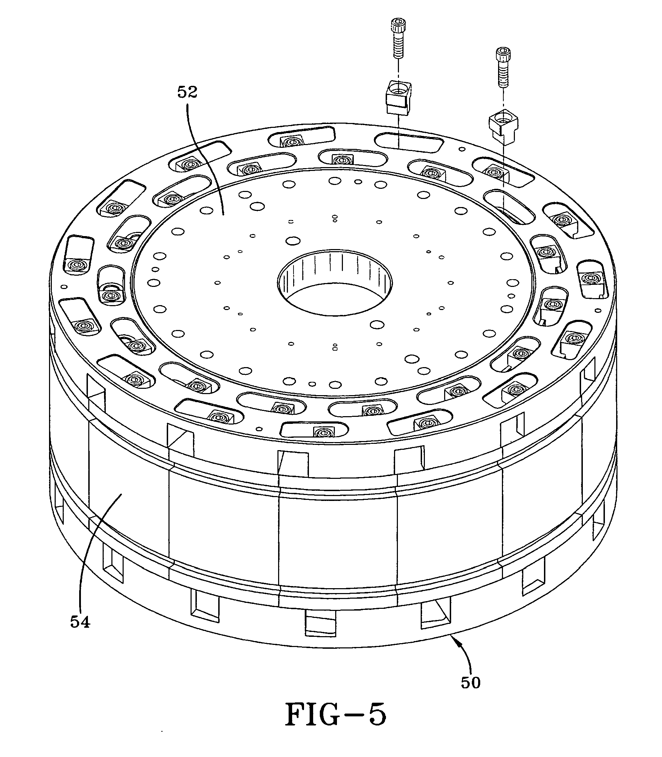

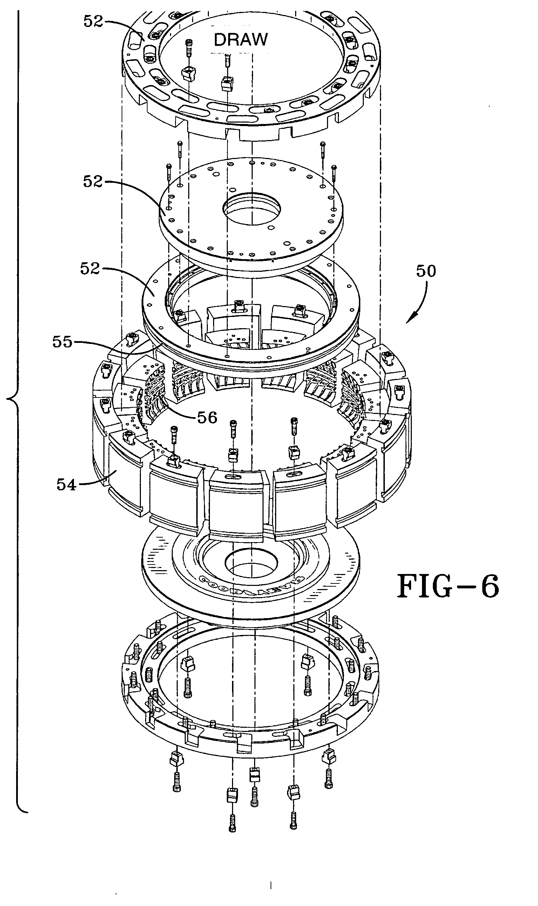

Once the tread belt assembly 3 is completely formed, the entire uncured tire 200 on the detachable building drum core 22 including the carcass 4 and tread belt reinforcing structure 3 freshly formed and preferably still hot mounted to it is removed from the trolley 60 and delivered to an open segmented mold 50 at location 140. As shown in Figures 5 and 6, a self-locking type mold is described in a EP-A- 1 468 814. This mold 50 is shown in perspective view has a top plate 52 which is removed and the segments 54 are radially expanded to accept building drum core 22 with the tread belt reinforcing structure 3 and carcass 4 mounted to it. Once inserted into the open mold 50 as illustrated in Figure 7, the top plate 52 of the mold 50 is closed upon the tire building drum core 22 and the segments 54 are radially contracted inwardly compressing against the still warm tread 7 against the tread forming surface of the mold 56 of the mold 50 as shown in Figure 7.

As shown in Figure 7, the carcass 4 and tread belt structure 3 mounted on the building drum core 22 now removed from trolley 60 can be inserted into the mold 50 and the empty trolley 60 received an empty detachable building drum core 22 and is moved back to an initial workstation to receive the instructions for the next tire assembly.

With the top plate 52 of the mold 50 open, the entire building drum core 22 with the carcass 4 and tread belt assembly 3 mounted thereto can be inserted directly into the mold 50. This is made possible due to the fact that an upper portion 55 of the tread mold forming section of the mold is attached to the top plate 52. This permits the entire uncured tire 200 to be able to fit directly into the mold 50 with the carcass 4 and tread belt assembly 3 in place. Once inserted into the mold 50, the mold 50 can be closed and locked and the carcass subassembly 4 inflated by applying internal pressure to the building drum core 22 further pressing the tread 7 into the internal surfaces of the mold 50. Once this is accomplished the mold 50 can be heated and pressurized to curing mold temperatures and pressures and the mold 50 will then finish the overall vulcanization of the tire 200 encased into the mold 50. As the mold 50 finishes the heating curing cycle it is ready for mold opening and removal of the tire. At this point, the mold 50 is open, the mold segments 54 are radially expanded and the building drum core 22 with the tire mounted thereto is removed from the mold 50.

With reference to Figures 4A, 4B, 4C, 4D and 4E, for a better understanding of the invention it must be appreciated that the carcass building drum core 22 is radially expandable and collapsible. As illustrated in Fig. 4A internal mechanisms 21 can be folded radially inwardly as the building drum core 22 is expanded axially outwardly. As the building drum core 22 is moved axially inwardly at both ends, the sidewall support mechanisms shown as interlocking triangles 21 A, 21 B, 21 C move radially outwardly until in a fully closed position these mechanisms 21A, 21 B and 21 C are almost fully radially extending as illustrated in Figure 4C. The result is that during the tire building an elastomeric cover or bladder 23 which is also partially reinforced at least in the crown area is mounted over these sidewall supporting structures 21 as shown in Figure 4D. This creates a generally rigid building surface upon which all the carcass components can be fabricated. The building drum core 22 being portable, as previously discussed, can be removed from the trolley 60 in this radially expanded condition and then can be transferred directly into the mold 50 for the curing as previously described. Once this is completed, however, the tire 200 must be removed and as is illustrated in Figure 4E this is done by simply expanding outwardly the axial ends which draws the sidewalls supports 21 down and the supporting elastomeric bladder 23 can be radially lowered such that the tire 200 can be removed from the tire building drum assembly 22 at the tire separating workstation 96.

Once this is accomplished, the tire building drum core 22 can go back to the trolley 60 for a second tire build, it will be picked up by a transfer means and placed on the trolley 60 or moved directly to a trolley mechanism 60 whereupon it will repeat the process for building a second tire. The tire building drum core 22 is explained in greater detail in EP-A- 1 457 309.

The automated module 10 as shown in Figure 1 permits the curing of tires in lot sizes as small as one tire to be produced while simultaneously producing other tire sizes at different workstations. The software package communicates to each workstation of the building module 100 the amount of rubber, the shape or profile and the type of component required for that specific tire build. As the building drum core 22 progress in front of the workstation the appropriate material at the appropriate location is applied, either to the building drum core 22 or to the previously applied components. All these functions can be occurring simultaneously as a tire 200 is being cured. These components, once formed, create a complete tire carcass 4 and a complete tread belt reinforcing structure 3.

An advantage of the present invention over prior art invention is that that tread belt subassembly 3 and carcass 4 are inserted directly into a mold 50 while freshly formed and located on the elevated temperature tire building drum core 22 whereupon the mold 50 is closed upon the tire assembly in such a preassembled fashion that it is cured directly into the mold 50. The unique self-locking mold 50 then is opened to permit the entire carcass 4 and tread belt 3 for that particular tire size to be inserted into the mold 50 while mounted on its building drum core 22. The mold 50 is then closed and heated for a curing process which may be done by induction heating with electromagnetic fields separately or in combination with steam heat or otherwise. Once the curing cycle is completed, the mold 50 is opened and the cured tire 200 on building drum core 22 is removed. This is all accomplished while another tire 200 is being simultaneously or concurrently fabricated on the trolley 60 with a detachable building drum core 22 at the various workstations of the module 100 along the predetermined path 20.

While the embodiment of Figures 1 and 2 shows the exemplary tire curing process or module 10 that would commonly be applied for passenger and light truck tires, the module is also applicable for aircraft, medium truck, motorcycle and off-the-road tires, it must be appreciated that additional workstations can be provided and that these workstations can be used to add other components in the tire building manufacturing without jeopardizing the overall flexibility of tire building as previously discussed. It is understood that the additional components may be used or not used as the as the specific tire selected is being built. Often times, many tires require components that are optional in other tires and therefore the builds may be different. The present invention permits this tire assembly to handle such variations and that the progression of the components through the line provides a rapid tire building capability.

One of the interesting differences of the present invention compared to prior art tire manufacturing is that it contemplates applying the components while hot onto the warmed or elevated temperature building drums and that while these hot components are freshly being produced, formed and applied at the carcass building and tread belt assembly workstations, they are then directly placed into a mold while hot, the mold is closed while all the components maintain their own heat from being formed and placed on the elevated temperature building drum. This has a tremendous advantage in that component materials can be provided that would otherwise bloom or cause a powdery substance called sulfur to leach out of the component prior to vulcanization. Historically, tires are made of strips and then stored. These strips set over a period of time and the material tends to bloom or have sulfur or other components leach out to the surface. This creates situations where the tires can have problems during manufacture due to the variations in freshness of the various components. The present invention ensures that the rubber materials are applied approximately as fresh as possible, preferably with no lap or butt splices. In other words they are still warm when they are placed in the mold. There has been no opportunity for contamination or deformation to occur due to subassembly storage and handling. This greatly improves the manufacturing quality of the finished product and ensures that the components will be properly place and properly mixed at the time they are applied. Furthermore, there are energy savings due to keeping materials hot instead of deliberately cooling for storage as in prior methods.

While the components are undoubtedly applied where formed creating a tremendous manufacturing advantage in terms of freshness, an additional advantage is that the component materials can be provided to each workstation in rather bulk form. The component material can be made without the use of processing aides such as anti-aging ingredients and curing accelerators needed to survive storage as no storage is needed, greatly reducing material cost. Furthermore, much of the component handling equipment commonly found in tire building can be eliminated. Therefore, inventory of intermediate components is reduced to a very low amount and in the case of the elastomer components the storage of these intermediate articles is virtually eliminated. This very compact reduced floor space tire building module greatly reduces the tonnage of raw material needed to be stored as components and eliminates such ancillary devices as storage racks and hand trucks, greatly reducing the manpower and maintenance required to support them.

## Claims

1. A method of assembling a tire and curing the tire, the method comprising the steps of:
applying hot tire components onto a building drum core (22) to form a hot uncured tire;
placing the hot uncured tire and the building drum core (22) into a preheated open mold (50);
closing the mold (50); and
adding additional heat energy to match a predetermined optimal cure temperature (Tₚ) and curing the tire (200) for a predetermined time (t), **characterized in that** the building drum core (22) is an elevated temperature building drum core (22) and that the hot uncured tire and the elevated temperature building drum core (22) are placed into the preheated open mold.

2. The method of claim 1, wherein the additional heat energy is input by activating one or more induction heating coils.

3. The method of claim 1 or 2, wherein the predetermined optimal cure temperature (Tₚ) is greater than the elevated temperature of the building drum core (22) and greater than the temperature of the hot tire components when inserted into the mold (50).

4. The method of at least one of the previous claims, further comprising:
assembling a second tire by applying hot tire components on a second elevated temperature building drum core as a first assembled tire (200) is being cured;
opening the mold (50);
removing the first tire (200) from the mold (50);
removing the first tire (200) from the elevated temperature building drum core (22);
inserting the second tire (200) on the second elevated building drum core into the mold (50); and
closing the mold (50) and curing the second tire as the first elevated building drum core (22) has hot tire components being applied to form a third tire.

5. The method of claim 1 or 2, wherein the additional heat energy is input by actuating two or more induction coils timed to a reduced peak load sequence in an alternating on/off pattern.

6. An apparatus for curing a hot uncured tire comprising:
a tire curing mold (50), the mold (50) having a central axis and outer portions for imparting the tread and sidewall shape and inner core (22) upon which the tire is mounted;
a frame for supporting the mold;
an induction curing dome (80) for encircling the mold (50); the induction curing dome (80) having one or more heating coils;
a means for moving the induction curing dome (80) into and away from encircling alignment with the mold (50);
a power source for activating the heating coils; wherein the apparatus further comprises a building drum core (22) which is at elevated temperature when the apparatus is used for curing a hot uncured tire and a means for picking up and inserting the building drum core (22) with the tire to be cured into the tire curing mold (50).

7. The apparatus of claim 6, wherein the frame has a mold support and one or more heating coils and/or wherein the induction curing dome has two or more coils.

8. The apparatus of claim 6 or 7, further comprising a mold locking means for opening and closing the mold.

9. The apparatus of claim 8, wherein the mold locking means is attached to the means for moving the induction curing dome and the means for moving is pivotably movable to bring the induction curing dome or the mold locking means into coaxial alignment with the mold prior to encircling the mold.

## Patentansprüche

1. Verfahren zum Zusammenbauen eines Reifens und Vulkanisieren des Reifens, wobei das Verfahren die Schritte umfasst des:
Anbringens heißer Reifenkomponenten auf einem Bautrommelkern (22) zur Bildung eines heißen unvulkanisierten Reifens;
Einlegens des heißen unvulkanisierten Reifens und des Bautrommelkerns (22) in ein vorgeheiztes offenes Formwerkzeug (50);
Schließens des Formwerkzeugs (50); und
Zufügens zusätzlicher Wärmeenergie zur Angleichung an eine vorbestimmte optimale Vulkanisationstemperatur (Tₚ) und Vulkanisierens des Reifens (200) für eine vorbestimmte Zeit (t),
**dadurch gekennzeichnet, dass** der Bautrommelkern (22) ein auf einer erhöhten Temperatur arbeitender Bautrommelkern (22) ist und dass der heiße unvulkanisierte Reifen und der auf einer erhöhten Temperatur arbeitende Bautrommelkern (22) in das vorgeheizte offene Formwerkzeug eingelegt werden.

2. Verfahren nach Anspruch 1, wobei die zusätzliche Wärmeenergie durch Aktivieren einer oder mehrerer Induktionsheizspulen eingebracht wird.

3. Verfahren nach Anspruch 1 oder 2, wobei die vorbestimmte optimale Vulkanisationstemperatur (Tₚ) größer als die erhöhte Temperatur des Bautrommelkerns (22) und größer als die Temperatur der heißen Reifenkomponenten beim Einlegen in das Formwerkzeug (50) ist.

4. Verfahren nach mindestens einem der vorgenannten Ansprüche, weiter umfassend:
Zusammenbauen eines zweiten Reifens durch Anbringen heißer Reifenkomponenten auf einem zweiten, auf einer erhöhten Temperatur arbeitenden Bautrommelkern, während ein erster zusammengebauter Reifen (200) vulkanisiert wird;
Öffnen des Formwerkzeugs (50);
Entfernen des ersten Reifens (200) aus dem Formwerkzeug (50);
Entfernen des ersten Reifens (200) von dem auf einer erhöhten Temperatur arbeitenden Bautrommelkern (22);
Einlegen des zweiten Reifens (200) auf dem zweiten, auf einer erhöhten Temperatur arbeitenden Bautrommelkern (22) in das Formwerkzeug (50); und
Schließen des Formwerkzeugs (50) und Vulkanisieren des zweiten Reifens, während heiße Reifenkomponenten an dem ersten, auf einer erhöhten Temperatur arbeitenden Bautrommelkern (22) angebracht werden, um einen dritten Reifen zu bilden.

5. Verfahren nach Anspruch 1 oder 2, wobei die zusätzliche Wärmeenergie durch Aktivieren von zwei oder mehr Induktionsspulen eingebracht wird, die zeitlich auf eine reduzierte Spitzenbelastungsabfolge in einem abwechselnden An-/Aus-Muster abgestimmt sind.

6. Vorrichtung zum Vulkanisieren eines heißen unvulkanisierten Reifens, umfassend:
ein Reifenvulkanisierformwerkzeug (50), wobei das Formwerkzeug (50) eine zentrale Achse und Außenteile, um die Laufflächen- und Seitenwandform zu verleihen, und einen inneren Kern (22), worauf der Reifen montiert ist, aufweist;
ein Gestell zum Tragen des Formwerkzeugs;
eine Induktions-Vulkanisierkuppel (80) zum Umgeben des Formwerkzeugs (50); wobei die Induktions-Vulkanisierkuppel (80) ein oder mehrere Heizspulen aufweist;
ein Mittel zum Bewegen der Induktions-Vulkanisierkuppel (80) in eine und aus einer umgebenden Ausrichtung mit dem Formwerkzeug (50);
eine Energiequelle zum Aktivieren der Heizspulen; wobei die Vorrichtung weiter einen Bautrommelkern (22), der auf einer erhöhten Temperatur ist, wenn die Vorrichtung zum Vulkanisieren eines heißen unvulkanisierten Reifens verwendet wird, und ein Mittel zum Aufnehmen und Einlegen des Bautrommelkerns (22) mit dem zu vulkanisierenden Reifen in das Reifenvulkanisierwerkzeug (50) umfasst.

7. Vorrichtung nach Anspruch 6, wobei das Gestell einen Formwerkzeugträger und ein oder mehrere Heizspulen aufweist und/oder wobei die Induktions-Vulkanisierkuppel zwei oder mehr Spulen aufweist.

8. Vorrichtung nach Anspruch 6 oder 7, weiter ein Formwerkzeugverriegelungsmittel zum Öffnen und Schließen des Formwerkzeugs umfassend.

9. Vorrichtung nach Anspruch 8, wobei das Formwerkzeugverriegelungsmittel an dem Mittel zum Bewegen der Induktions-Vulkanisierkuppel befestigt ist und das Mittel zum Bewegen schwenkbar bewegbar ist, um die Induktions-Vulkanisierkuppel oder das Formwerkzeugverriegelungsmittel vor dem Umgeben des Formwerkzeugs in koaxiale Ausrichtung mit dem Formwerkzeug zu bringen.

## Revendications

1. Procédé d'assemblage d'un bandage pneumatique et de vulcanisation du bandage pneumatique, le procédé comprenant les étapes consistant à :
appliquer des composants chauds du bandage pneumatique sur un noyau de tambour de confection (22) pour obtenir un bandage pneumatique chaud non vulcanisé ;
placer le bandage pneumatique chaud non vulcanisé et le noyau de tambour de confection (22) dans un moule ouvert préchauffé (50) ;
fermer le moule (50) ; et
ajouter de l'énergie thermique supplémentaire pour correspondre à une température de vulcanisation optimale prédéterminée (Tₚ) et vulcaniser le bandage pneumatique (200) pendant un laps de temps prédéterminé (t),
**caractérisé en ce que** le noyau de tambour de confection (22) est un noyau de tambour de confection (22) à température élevée et **en ce que** le bandage pneumatique chaud non vulcanisé et le noyau de tambour de confection à température élevée (22) sont placés dans le moule ouvert préchauffé.

2. Procédé selon la revendication 1, dans lequel l'énergie thermique supplémentaire est entrée par activation d'un ou de plusieurs serpentins de chauffage par induction.

3. Procédé selon la revendication 1 ou 2, dans lequel la température de vulcanisation optimale prédéterminée (Tₚ) est supérieur à la température élevée du noyau de tambour de confection (22) est supérieur à la température des composants de bandage pneumatique chauds lors de leur insertion dans le moule (50).

4. Procédé selon au moins une des revendications précédentes, comprenant en outre le fait de :
assembler un deuxième bandage pneumatique par application de composants chauds de bandage pneumatique sur un deuxième noyau de tambour de confection à température élevée lorsque un premier bandage pneumatique assemblé (200) est en train d'être vulcanisé ;
ouvrir le moule (50) ;
retirer le premier bandage pneumatique (200) du moule (50) ;
retirer le premier bandage pneumatique (200) du noyau de tambour de confection à température élevée (22) ;
insérer le deuxième bandage pneumatique (200) sur le deuxième noyau de tambour de confection à température élevée dans le moule (50) ; et
fermer le moule (50) et vulcaniser le deuxième bandage pneumatique lors de l'application de composants chauds de bandage pneumatique sur le premier noyau de tambour de confection à température élevée (22) pour obtenir un troisième bandage pneumatique.

5. Procédé selon la revendication 1 ou 2, dans lequel l'énergie thermique supplémentaire est entrée en actionnant deux serpentins d'enduction ou plus synchronisée par rapport à une séquence de charge maximale réduite en fonction d'un modèle de mise en circuit/hors circuit en alternance.

6. Appareil pour vulcaniser un bandage pneumatique chaud non vulcanisé, comprenant :
un moule de vulcanisation de bandage pneumatique (50) possédant un axe central et des portions externes pour imprimer une configuration à la bande de roulement et aux flancs, ainsi qu'un noyau interne (22) sur lequel est monté le bandage pneumatique ;
un bâti pour supporter le moule ;
un dôme de vulcanisation par induction (80) pour encercler le moule (50), le dôme de vulcanisation par induction (80) possédant un ou plusieurs serpentins de chauffage ;
un moyen pour amener le dôme de vulcanisation par induction (80) à une mise en alignement par encerclement avec le moule (50) et à l'écart de ladite mise en alignement ;
une source d'énergie pour activer les serpentins de chauffage ; l'appareil comprenant en outre un noyau de tambour de confection (22) qui possède une température élevée lorsque l'appareil est utilisé pour vulcaniser un bandage pneumatique chaud non vulcanisé, et un moyen cours saisir et insérer le noyau de tambour de confection (22) avec le bandage pneumatique à vulcaniser, dans le moule de vulcanisation du bandage pneumatique (50).

7. Appareil selon la revendication 6, dans lequel le bâti possède un bâti de moule et un ou plusieurs serpentins de chauffage et/ou dans lequel le dôme de vulcanisation par induction possède deux serpentins ou plus.

8. Appareil selon la revendication 6 ou 7, comprenant en outre un moyen de verrouillage de moule pour ouvrir et pour fermer le moule.

9. Appareil selon la revendication 8, dans lequel le moyen de verrouillage de moule est fixé au moyen pour déplacer le dôme de vulcanisation par induction et le moyen de déplacement est mobile en pivotement pour amener le dôme de vulcanisation par induction ou le moyen de verrouillage de moule en alignement coaxial avec le moule avant d'encercler le moule.
